# EUROPEAN PATENT APPLICATION

(11) **EP 3 734 455 A1**
(43) Date of publication of application: **04.11.2020**
(21) Application number: 20165173.4
(22) Date of filing: 24.03.2020
(51) Int. Cl.: G06F 9/54, G06F 11/30, G06F 11/34

(54) **TECHNOLOGY FOR PROVIDING OUT-OF-BAND PROCESSOR TELEMETRY**

(30) Priority: 01.05.2019 US 201916400063
(71) Applicant: Intel Corporation, Santa Clara, CA 95054 (US)
(72) Inventor: VAN DE GROENENDAAL, Johan Gerard, Portland, OR 97229 (US); YASIN, Ahmad, 31015 Haifa (IL); GENDLER, Alexander, 27041 Kiriat Motzkin (IL)
(74) Representative: Samson & Partner Patentanwälte mbB

(57) **Abstract**

An integrated circuit includes technology for providing out-of-band (OOB) processor telemetry. The integrated circuit comprises a processor comprising a core and a distributed core perimeter. The integrated circuit also comprises a telemetry push agent in the distributed core perimeter, and an OOB telemetry manager in the core to operate out of band and to send telemetry data for the processor to the telemetry push agent. The telemetry push agent comprises control logic to (a) receive the telemetry data from the OOB telemetry manager and (b) forward at least some of the telemetry data to in-band telemetry software. Other embodiments are described and claimed.

## Description

### Technical Field

The present disclosure pertains in general to data processing systems and in particular to technology for providing out-of-band processor telemetry.

### Background

In the field of data processing systems, the term "processor telemetry" pertains to the process of (a) measuring attributes of a processor while that processor is operating and (b) transmitting the measurement results to a destination. Similarly, "processor telemetry data" denotes the information generated through processor telemetry. For purposes of this disclosure, the term "telemetry" means "processor telemetry," and the term "telemetry data" means "processor telemetry data."

A conventional processor may include features which enable software to obtain telemetry data from the processor. For instance, at least some of the Intel® Xeon® processors from Intel Corporation include telemetry features which enable software to obtain telemetry data pertaining to a wide variety of processor attributes.

Based on telemetry data, software in a data processing system may enhance operation of the data processing system by (a) optimizing power and/or performance for the current workload, (b) predicting when the system or a system component may fail, (c) learning how an application uses the system resources and better tuning the system dynamically, etc.

However, a conventional data processing system uses a software layer running on the processor to collect the telemetry data. For instance, the software layer may include a performance monitoring agent that collects the telemetry data. And since the performance monitoring agent is part of the software layer, that agent is considered to be an in-band agent. Thus, a conventional data processing system may use an in-band agent to collect telemetry data. For purposes of this disclosure, when a data processing system uses an in-band agent to collect telemetry data, that data processing system may be referred to as including technology for providing in-band telemetry.

However, an in-band performance monitoring agent may consume a significant amount of system resources to collect the telemetry data. An in-band performance monitoring agent may also need to be tailored to a particular operating system and/or to a particular software application.

As described in greater detail below, the present disclosure introduces technology for providing out-of-band processor telemetry.

### Brief Description of the Drawings

Features and advantages of the present invention will become apparent from the appended claims, the following detailed description of one or more example embodiments, and the corresponding figures, in which:
**Figure 1** is a block diagram depicting an example embodiment of a data processing system with technology for providing out-of-band processor telemetry.
**Figure 2** is a flow diagram to describe operations performed by certain components of the data processing system of Figure 1, including communications between those components to provide OOB telemetry.
**Figure 3** presents a flowchart of an example embodiment of a process for providing out-of-band processor telemetry, with regard to the telemetry collector of Figure 1.
**Figure 4** presents a flowchart of an example embodiment of a process for providing out-of-band processor telemetry, with regard to the telemetry messenger of Figure 1.
**Figure 5** is a block diagram illustrating both an exemplary in-order pipeline and an exemplary register renaming, out-of-order issue/execution pipeline according to embodiments of the invention.
**Figure 6** is a block diagram illustrating both an exemplary embodiment of an in-order architecture core and an exemplary register renaming, out-of-order issue/execution architecture core to be included in a processor according to embodiments of the invention.
**Figures 7 and 8** are block diagrams of a more specific exemplary in-order core architecture, which core would be one of several logic blocks (including other cores of the same type and/or different types) in a chip.
**Figure 9** is a block diagram of a processor that may have more than one core, may have an integrated memory controller, and may have integrated graphics according to embodiments of the invention.
**Figure 10** is a block diagram of a system according to embodiments of the invention.
**Figures 11** **and** **12** are block diagrams of more specific exemplary systems according to embodiments of the invention.
**Figure 13** is a block diagram of a system on a chip according to embodiments of the invention.
**Figure 14** is a block diagram depicting the use of a software instruction converter to convert binary instructions in a source instruction set to binary instructions in a target instruction set according to embodiments of the invention.

### Detailed Description

As indicated above, an in-band performance monitoring agent may consume significant amounts of system resources collecting telemetry data, and it may need to be tailored to a particular operating system (OS) and/or to a particular software application. The present disclosure introduces technology for providing out-of-band processor telemetry. In particular, a processor according to the present disclosure includes telemetry facilities which operate at a hardware level to collect telemetry data for the processor. Accordingly, those telemetry facilities may be referred to as "out-of-band (OOB) telemetry facilities." As described in greater detail below, the OOB telemetry facilities may collect telemetry data without consuming significant amounts of system resources. In addition, the OOB telemetry facilities may be OS and application "agnostic," in that the OOB telemetry features do not need to be tailored to any particular OS or application.

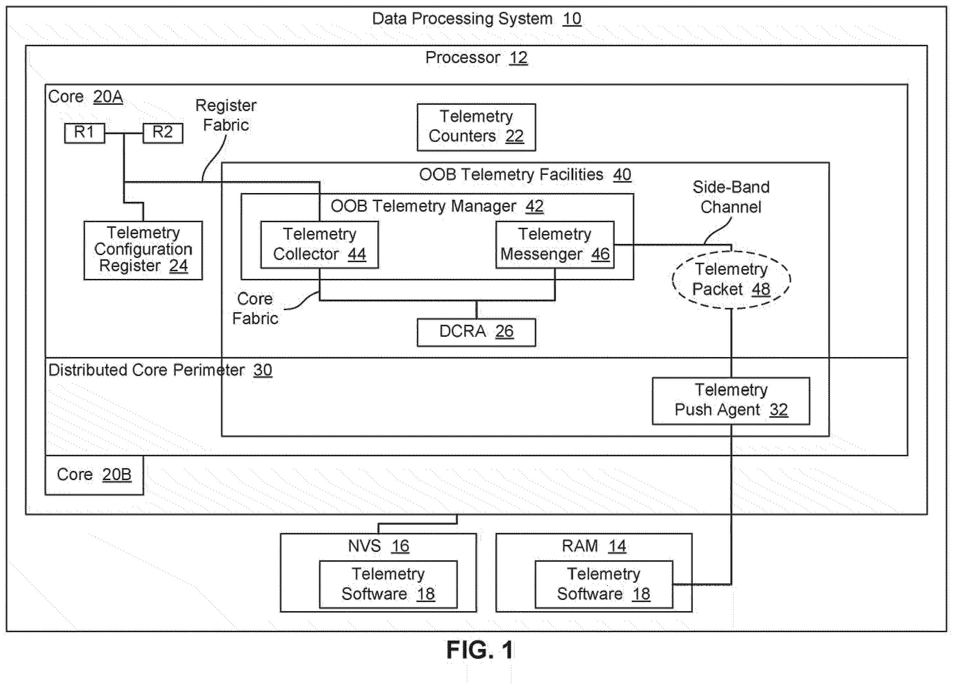

**Figure 1** is a block diagram depicting an example embodiment of a data processing system 10 with technology for providing out-of-band processor telemetry. Data processing system 10 includes a processor 12 in communication with random access memory (RAM) 14 and non-volatile storage (NVS) 16. NVS 16 may include various software components (e.g., an operating system (OS) and user applications) that data processing system 10 copies into RAM 14 for execution. When software from NVS 16 and/or RAM 14 is executing on processor 12, that software may be referred to as a "software layer." The features of processor 12 which support execution of that software may be referred to as a "hardware layer." The software layer may be referred to as running "on top of' the hardware layer. In the embodiment of Figure 1, the software in NVS 16 includes telemetry software 18. Since telemetry software 18 runs in the software layer, it may be referred to as "in-band telemetry software" or "in-band telemetry logic." In one embodiment, telemetry software 18 may be part of an OS, for instance. Data processing system 10 may also include various other software and hardware components (e.g., a memory controller, etc.) that are not illustrated to avoid obscuring the illustrated features.

In the embodiment of Figure 1, processor 12 includes core 20A, core 20B, and a distributed core perimeter 30 that all reside in the same chip or in the same package. However, in alternative embodiments, a data processing system may include one or more processors, each processor may include one or more cores, etc. For instance, a data processing system may include multiple processors which reside in separate packages, and each processor may include multiple cores. In the embodiment of Figure 1, core 20B may include features that are the same as or similar to the features of core 20A. Distributed core perimeter 30 may also be referred to as an "uncore." In the embodiment of Figure 1, each core resides in a domain with one set of voltages and/or frequencies, while distributed core perimeter 30 resides in a domain with different voltages and/or frequencies.

As illustrated, processor 12 includes OOB telemetry facilities (OTF) 40. As described in greater detail below, OTF 40 includes an OOB telemetry manager 42 and a distributed core register array (DCRA) 26 within core 20A, and a telemetry push agent 32 within distributed core perimeter 30. As described in greater detail below, OTF 40 collects telemetry data and pushes that collected telemetry data to telemetry software 18. Furthermore, OTF 40 may collect the telemetry data much more efficiently than a convention data processing system that uses an in-band agent to collect telemetry data. For instance, an in-band agent in a conventional system might consume 2,000 to 3,000 cycles to collect telemetry data, but OTF 40 might consume only 50 cycles to collect the same kind of telemetry data in data processing system 10.

In the embodiment of Figure 1, core 20A includes telemetry counters 22. Telemetry counters 22 include counters for tracking many different aspects of operation for core 20A. Those counters may include, without limitation, counters for microcode, for an out-of-order (OOO) core cluster, for a mid-level cache (MLC) core cluster, for power management (PM), for core utilization, for simultaneous multithreading (SMT) utilization, for front-end bound, for back-end bound, for bad speculation, for retiring, etc. In one embodiment or scenario, the counters for microcode include metrics to indicate operational attributes such as the amount of time spent executing microcode, the counters for the OOO core cluster include metrics to indicate operational attributes such as a count of instructions that have been retired, the counters for the MLC core cluster include metrics to indicate operational attributes such as a count of the requests for new data, etc. The data in telemetry counters 22 may be referred to as "raw telemetry data."

Core 20A also includes a telemetry configuration register 24. Telemetry configuration register 24 contains settings to indicate what kinds of telemetry data should be collected (out of band) by telemetry collector 44 and forwarded (out of band) by telemetry messenger 46 to telemetry software 18 via telemetry push agent 32.

OOB telemetry manager 42 operates on a hardware level to implement telemetry components such as a telemetry collector 44 and a telemetry messenger 46. In another embodiment or scenario, the telemetry collector may be referred to as a telemetry nucleus, and the telemetry messenger may be referred to as a telemetry perimeter. OOB telemetry manager 42 (and the components therein) may be implemented, for example, as hardware, as microcode (ucode), as firmware, or as a combination of hardware, ucode, and/or firmware.

Also, as illustrated, core 20A includes a core fabric to connect components such as telemetry collector 44, telemetry messenger 46, and DCRA 26. Core 20A also includes a register fabric to connect components such as telemetry collector 44, telemetry configuration register 24, and other registers, such as general purpose registers (GPRs) (e.g., R1, R2, etc.). Core 20A also includes a side-band channel to connect components within core 20A (such as telemetry messenger 46) with components in distributed core perimeter 30 (such as telemetry push agent 32). For instance, as described in greater detail below, telemetry messenger 46 may send telemetry packets (e.g., telemetry packet 48) to telemetry push agent 32 via the side-band channel. Telemetry push agent 32 may then push telemetry data to telemetry software 18.

DCRA 26 is an array of registers that can be read from and written to by components such as telemetry collector 44 and telemetry messenger 46. In addition, core 20A uses DCRA 26 to hold data that is generated within core 20A and then sent to another destination in processor 12 outside of core 20A. In particular, as described in greater detail below, telemetry messenger 46 sends telemetry data from DCRA 26 to telemetry push agent 32, which resides outside of core 20A in distributed core perimeter 30. Thus, DCRA 26 may include intermediate or temporary telemetry data, and telemetry messenger 46 may use that temporary telemetry data to generate final telemetry data for telemetry push agent 32.

As illustrated in Figure 1, since components such as telemetry collector 44, telemetry messenger 46, and telemetry push agent 32 operate out of band to collect telemetry data, those components are part of OTF 40.

As described in greater detail below, telemetry collector 44 collects telemetry data based on settings that telemetry collector 44 obtains from telemetry configuration register 24 via the register fabric in core 20A. Telemetry collector 44 obtains that raw telemetry data from telemetry counters 22. Telemetry collector 44 and telemetry messenger 46 then format that telemetry data and make it available to components outside of core 20A. For instance, telemetry collector 44 may generate collected telemetry data based on the raw telemetry data, and telemetry messenger 46 may generate telemetry packets based on the collected telemetry data. Telemetry messenger 46 may send those telemetry packets to telemetry push agent 32 via the side-band channel. Telemetry push agent 32 may then forward the telemetry packets (or other forms of the collected telemetry data) to telemetry software 18.

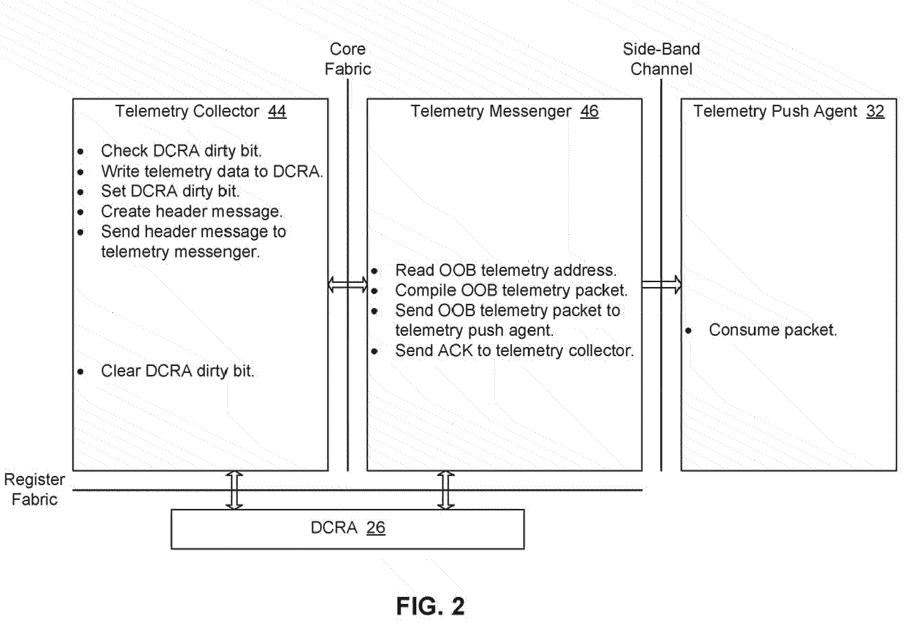

**Figure 2** is a flow diagram to describe operations performed by certain components of data processing system 10, including communications between those components to provide OOB telemetry. For instance, Figure 2 illustrates that telemetry collector 44 and telemetry messenger 46 communicate with DCRA 26 via the register fabric, that telemetry collector 44 and telemetry messenger 46 communication with each other via the core fabric, and telemetry messenger 46 communicates with telemetry push agent 32 via the side-band channel. In addition, the bullet points within the blocks for telemetry collector 44, telemetry messenger 46, and telemetry push agent 32 are arranged in relative vertical positions to illustrate the sequence generally followed during the process of providing OOB telemetry.

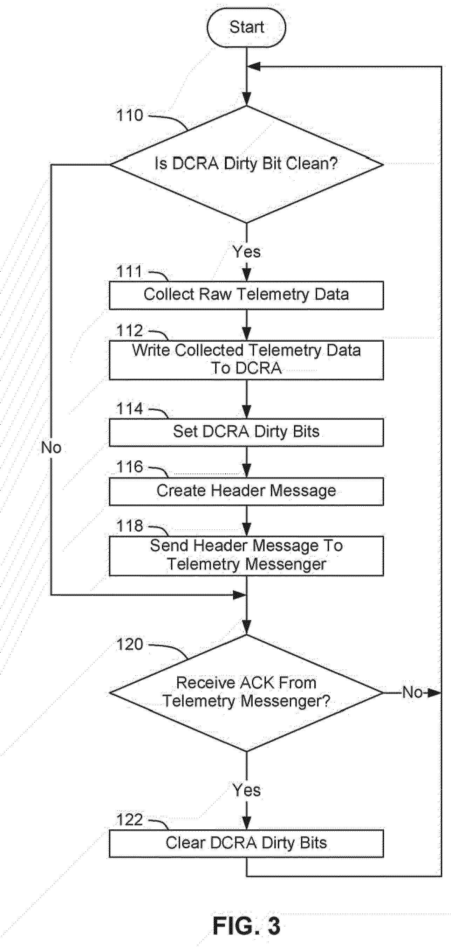

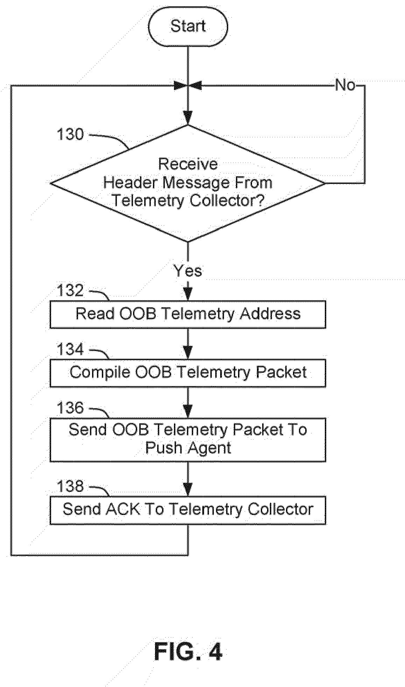

**Figures 3** **and** **4** present flowcharts of an example embodiment of a process for providing out-of-band processor telemetry, with regard, respectively, to telemetry collector 44 and telemetry messenger 46 in data processing system 10. Those flowcharts also correspond to the components and operations illustrated in Figure 2.

The process of Figure 3 may start after telemetry collector 44 has read the current telemetry settings from telemetry configuration register 24 via the register fabric and configured the telemetry hardware in processor 12 accordingly. As shown at block 110, telemetry collector 44 may then determine whether so-called "dirty bits" in DCRA 26 are clear or clean.

As indicated above, DCRA 26 is an array of registers that can be read from and written to by components such as telemetry collector 44 and telemetry messenger 46. In one embodiment, telemetry collector 44 writes one DCRA entry to each register in DCRA 26, and each of those registers includes a dirty bit to indicate whether that register includes a DCRA entry which has been written by telemetry collector 44 but not yet read or transmitted by telemetry messenger 46. If the dirty bits are clean, telemetry collector 44 may collect raw telemetry data from telemetry counters 22, as shown at block 111. Telemetry collector 44 may then write the collected telemetry data to DCRA 26, as shown at block 112.

For instance, in one embodiment or scenario, telemetry collector 44 formats the raw telemetry data that has been collected from telemetry counters 22 into two 32-bit blocks of telemetry data, and telemetry collector 44 writes those two blocks to a 64 bit register in DCRA 26. Those two blocks may be referred to as "Data-1" and "Data-2". In one embodiment or scenario, each of those blocks contains a header segment (e.g., the first 4 bits) and a data segment (e.g., the remaining 28 bits). The telemetry data that telemetry collector 44 stores in DCRA 26 may identify or indicate the operational attributes of core 20A that were measured in telemetry counters 22 and collected by telemetry collector 44. For example, as indicated above, those operational attributes may include metrics for microcode, metrics for the OOO core cluster, metrics for the MLC core cluster, metrics for core utilization, metrics for SMT utilization, metrics for PM, etc. As shown at block 114, telemetry collector 44 may then set the DCRA dirty bits.

Also, as shown at blocks 116 and 118, telemetry collector 44 may generate a header message and send that header message to telemetry messenger 46. Telemetry collector 44 may thus provide the header message and the two 32-bit blocks of telemetry data to telemetry messenger 46. Accordingly, the header message and the two 32-bit blocks of telemetry data may be considered to be three messages: Header, Data-1, Data-2.

Similarly, since telemetry collector 44 uses the core fabric and DCRA 26 to send data to telemetry messenger 46, the core fabric and DCRA 26 may both be referred to as "channels." For instance, as indicated above, telemetry collector 44 collects telemetry data from a previous stage (e.g., telemetry counters 22), formats or packetizes that data into the proper form for processing by telemetry messenger 46, and uses DCRA 26 as a channel to send the formatted data to telemetry messenger 46.
As described in greater detail below with regard to Figure 4, telemetry messenger 46 may then use the data from telemetry collector 44 to generate telemetry packets for telemetry push agent 32.

As shown at block 120 of Figure 3, after sending the header message to telemetry messenger 46, telemetry collector 44 may then determine whether telemetry collector 44 has received an acknowledgment (ACK) message from telemetry messenger 46 to indicate that telemetry messenger 46 received the header message. Alternatively, the process may reach block 120 in response to telemetry messenger 46 determining that the dirty bit is not clean. If telemetry collector 44 has not received an ACK from telemetry messenger 46, the process may return to block 110. Thus, after telemetry collector 44 writes telemetry data to DCRA 26 and sets the dirty bit, telemetry collector 44 may wait for the dirty bit to be cleared before writing additional telemetry data to DCRA 26. However, referring again to block 120, if telemetry collector 44 has received an ACK from telemetry messenger 46, telemetry collector 44 may clear the DCRA dirty bit, as shown at block 122. The process may then return to block 110, and telemetry collector 44 may repeat the operations described above to send new telemetry data from telemetry counters 22 to telemetry messenger 46, as indicated above.

As indicated above, the process of Figure 4 presents a flowchart of an example embodiment of a process for providing out-of-band processor telemetry, with regard to telemetry messenger 46. That process may start when data processing system is powered on. Then, as shown at block 130, telemetry messenger 46 may determine whether it has received a header message from telemetry collector 44. If telemetry messenger 46 has not received a header message from telemetry collector 44, the process may wait at block 13o until a header message is received. As shown at block 132, when telemetry messenger 46 receives a header message, telemetry messenger 46 may respond be reading an OOB telemetry address from a remote address array in distributed core perimeter 30. In one embodiment or scenario, the OOB telemetry address points to telemetry push agent 32. As shown at block 134, telemetry messenger 46 then generates an OOB telemetry packet (e.g., telemetry packet 48), based on the header message from telemetry collector 44 and the telemetry data in DCRA 26. In addition, telemetry messenger 46 may add information to the telemetry packet to address the packet to the desired destination. As shown at block 136, telemetry messenger 46 then sends the telemetry packet to telemetry push agent 32. As shown at block 138, telemetry messenger 46 then sends an ACK to telemetry collector 44, to indicate that the telemetry data in DCRA 26 has been processed. The process may then return to block 130, with telemetry messenger 46 waiting to receive the next header message from telemetry collector 44. However, in an alternative embodiment or scenario, instead of (or in addition to) pushing packets, a telemetry messenger may use other techniques to bridge or carry the telemetry data from the core to the uncore (and/or to other external components, such as in-band software). For instance, the telemetry messenger may write the accumulated telemetry data to one or more registers that are accessible to the telemetry push agent and/or to the telemetry software.

As shown in Figure 2, when telemetry messenger 46 sends a telemetry packet to telemetry push agent 32, telemetry push agent 32 may respond by consuming that packet. For instance, telemetry push agent 32 may read the packet and then forward the telemetry data from the packet to telemetry software 18. In addition, when forwarding telemetry data to telemetry software 18, telemetry push agent 32 may add additional information to that data. For instance, telemetry push agent 32 may send telemetry data that also includes additional parameters for communication, such as an identifier for the sending core (e.g., core 20A) and an identifier for the target unit (e.g., telemetry software 18). In one embodiment, telemetry push agent 32 forwards the telemetry data to telemetry software 18 by extracting the telemetry data from the telemetry packets and storing that extracted data in a portion of RAM 14 that has been allocated to telemetry software 18 (e.g., in the stack or the heap of telemetry software 18). However, in an alternative embodiment or scenario, instead of (or in addition to) writing to RAM, a telemetry push agent may use other techniques to send the telemetry data to the in-band software. For instance, the telemetry push agent may write the telemetry data to one or more registers that are accessible to the telemetry software.

Thus, as has been described, processor 12 uses OTF 40 to send telemetry data to in-band telemetry processing software. Also, as indicated above, core 20B may include features that are the same as or similar to the features of core 20A. For instance, core 20B may also include telemetry counters, a DCRA, an OOB telemetry manager (with a telemetry collector and a telemetry messenger), etc. And that OOB telemetry manager may collect telemetry data for core 20B and forward that collected telemetry data to telemetry push agent 32, for ultimate delivery to telemetry software 18. Moreover, in other embodiments, a processor may include multiple processing cores, and some or all of those processing cores may include its own OOB telemetry facilities (such as a DCRA, an OOB telemetry manager, etc.) for collecting and sending core-specific telemetry data to in-band telemetry software.

Although certain example embodiments are described herein, one of ordinary skill in the art will understand that those example embodiments may easily be divided, combined, or otherwise altered to implement additional embodiments. Thus, the present teachings are not limited to the embodiments and/or scenarios described herein, but may be used to advantage in a wide variety of embodiment and scenarios. The following section describes features of various alternative embodiments which may include OOB telemetry facilities according to the present disclosure.

### Additional Embodiments

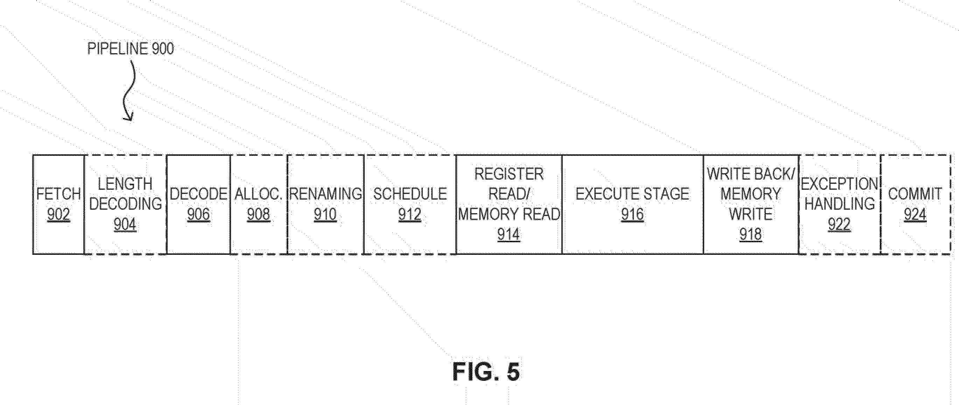

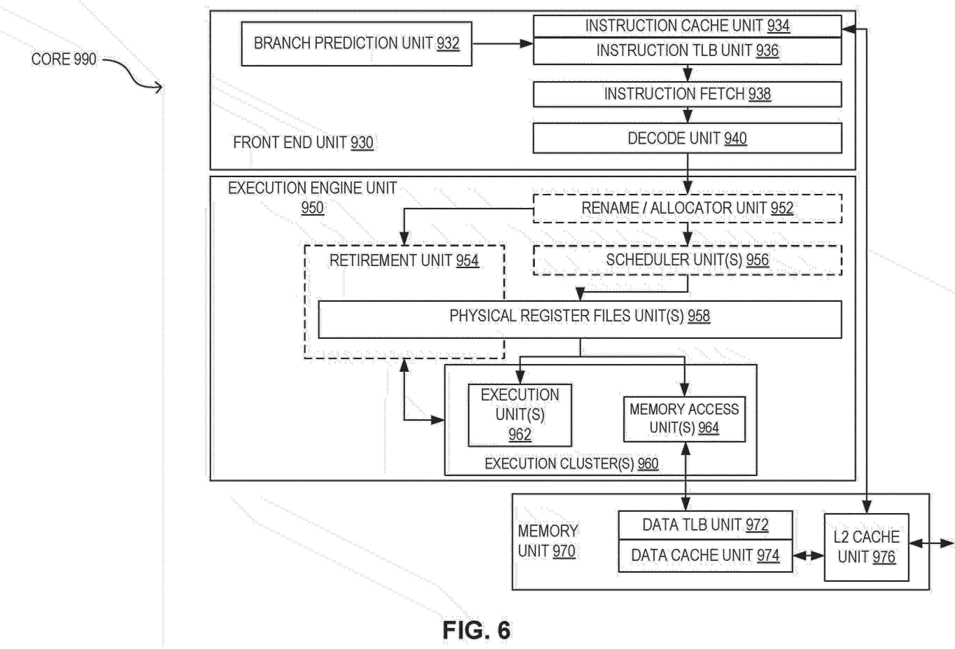

**Figure 5** is a block diagram illustrating both an exemplary in-order pipeline and an exemplary register renaming, out-of-order issue/execution pipeline according to embodiments of the invention. **Figure 6** is a block diagram illustrating both an exemplary embodiment of an in-order architecture core and an exemplary register renaming, out-of-order issue/execution architecture core to be included in a processor according to embodiments of the invention. The solid lined boxes in Figures 5 and 6 illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In Figure 5, a processor pipeline 900 includes a fetch stage 902, a length decode stage 904, a decode stage 906, an allocation stage 908, a renaming stage 910, a scheduling (also known as a dispatch or issue) stage 912, a register read/memory read stage 914, an execute stage 916, a write back/memory write stage 918, an exception handling stage 922, and a commit stage 924.

Figure 6 shows processor core 990 including a front end unit 930 coupled to an execution engine unit 950, and both are coupled to a memory unit 970. The core 990 may be a reduced instruction set computing (RISC) core, a complex instruction set computing (CISC) core, a very long instruction word (VLIW) core, or a hybrid or alternative core type. As yet another option, the core 990 may be a special-purpose core, such as, for example, a network or communication core, a compression engine, a coprocessor core, a general-purpose graphics processing unit (GPGPU), a graphics core, or the like.

The front end unit 930 includes a branch prediction unit 932 coupled to an instruction cache unit 934, which is coupled to an instruction translation lookaside buffer (TLB) 936, which is coupled to an instruction fetch unit 938, which is coupled to a decode unit 940. The decode unit 940 (or decoder) may decode instructions, and generate as an output one or more micro-operations, micro-code entry points, microinstructions, other instructions, or other control signals, which are decoded from, or which otherwise reflect, or are derived from, the original instructions. The decode unit 940 may be implemented using various different mechanisms. Examples of suitable mechanisms include, but are not limited to, look-up tables, hardware implementations, programmable logic arrays (PLAs), microcode read only memories (ROMs), etc. In one embodiment, the core 990 includes a microcode ROM or other medium that stores microcode for certain macroinstructions (e.g., in decode unit 940 or otherwise within the front end unit 930). The decode unit 940 is coupled to a rename/allocator unit 952 in the execution engine unit 950.

The execution engine unit 950 includes the rename/allocator unit 952 coupled to a retirement unit 954 and a set of one or more scheduler unit(s) 956. The scheduler unit(s) 956 represents any number of different schedulers, including reservations stations, central instruction window, etc. The scheduler unit(s) 956 is coupled to the physical register file(s) unit(s) 958. Each of the physical register file(s) units 958 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 958 comprises a vector registers unit, a write mask registers unit, and a scalar registers unit. These register units may provide architectural vector registers, vector mask registers, and general purpose registers. The physical register file(s) unit(s) 958 is overlapped by the retirement unit 954 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 954 and the physical register file(s) unit(s) 958 are coupled to the execution cluster(s) 960. The execution cluster(s) 960 includes a set of one or more execution units 962 and a set of one or more memory access units 964.

The execution units 962 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 956, physical register file(s) unit(s) 958, and execution cluster(s) 960 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 964). It should also be understood that where separate pipelines are used, one or more of these pipelines may be out-of-order issue/execution and the rest in-order.

The set of memory access units 964 is coupled to the memory unit 970, which includes a data TLB unit 972 coupled to a data cache unit 974 coupled to a level 2 (L2) cache unit 976. In one exemplary embodiment, the memory access units 964 may include a load unit, a store address unit, and a store data unit, each of which is coupled to the data TLB unit 972 in the memory unit 970. The instruction cache unit 934 is further coupled to a level 2 (L2) cache unit 976 in the memory unit 970. The L2 cache unit 976 is coupled to one or more other levels of cache and eventually to a main memory.

By way of example, the exemplary register renaming, out-of-order issue/execution core architecture may implement the pipeline 900 as follows: 1) the instruction fetch 938 performs the fetch and length decoding stages 902 and 904; 2) the decode unit 940 performs the decode stage 906; 3) the rename/allocator unit 952 performs the allocation stage 908 and renaming stage 910; 4) the scheduler unit(s) 956 performs the schedule stage 912; 5) the physical register file(s) unit(s) 958 and the memory unit 970 perform the register read/memory read stage 914; the execution cluster 960 performs the execute stage 916; 6) the memory unit 970 and the physical register file(s) unit(s) 958 perform the write back/memory write stage 918; 7) various units may be involved in the exception handling stage 922; and 8) the retirement unit 954 and the physical register file(s) unit(s) 958 perform the commit stage 924.

The core 990 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 990 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

While register renaming is described in the context of out-of-order execution, it should be understood that register renaming may be used in an in-order architecture. While the illustrated embodiment of the processor also includes separate instruction and data cache units 934/974 and a shared L2 cache unit 976, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

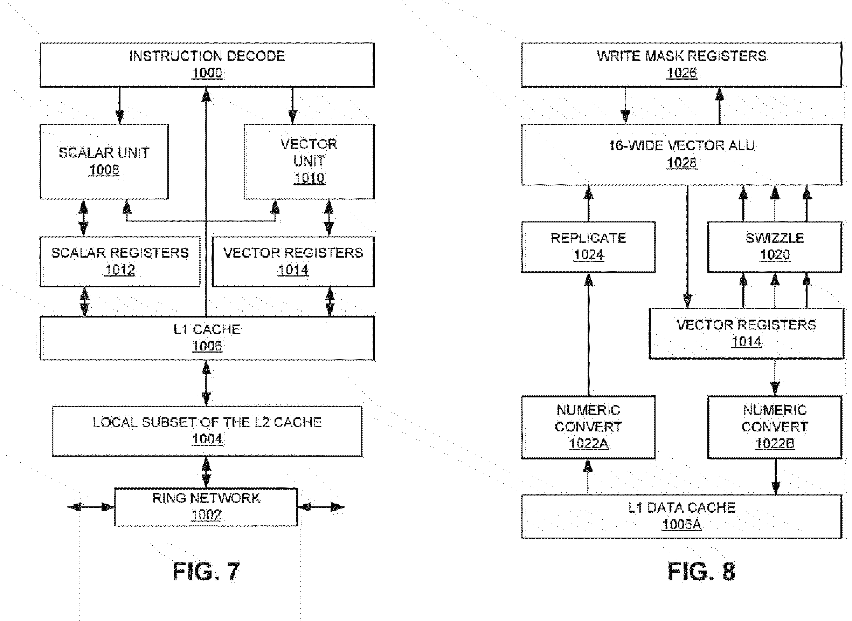

**Figures 7 and 8** are block diagrams of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

Figure 7 is a block diagram of a single processor core, along with its connection to the on-die interconnect network 1002 and with its local subset of the Level 2 (L2) cache 1004, according to embodiments of the invention. In one embodiment, an instruction decoder 1000 supports the x86 instruction set with a packed data instruction set extension. An L1 cache 1006 allows low-latency accesses to cache memory into the scalar and vector units. While in one embodiment (to simplify the design), a scalar unit 1008 and a vector unit 1010 use separate register sets (respectively, scalar registers 1012 and vector registers 1014) and data transferred between them is written to memory and then read back in from an L1 cache 1006, alternative embodiments of the invention may use a different approach (e.g., use a single register set or include a communication path that allow data to be transferred between the two register files without being written and read back).

The local subset of the L2 cache 1004 is part of a global L2 cache that is divided into separate local subsets, one per processor core. Each processor core has a direct access path to its own local subset of the L2 cache 1004. Data read by a processor core is stored in its L2 cache subset 1004 and can be accessed quickly, in parallel with other processor cores accessing their own local L2 cache subsets. Data written by a processor core is stored in its own L2 cache subset 1004 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

Figure 8 is an expanded view of part of the processor core in Figure 7 according to embodiments of the invention. Figure 8 includes an L1 data cache 1006A part of the L1 cache 1004, as well as more detail regarding the vector unit 1010 and the vector registers 1314. Specifically, the vector unit 1010 is a 16-wide vector processing unit (VPU) (see the 16-wide ALU 1028), which executes one or more of integer, single-precision float, and double-precision float instructions. The VPU supports swizzling the register inputs with swizzle unit 1020, numeric conversion with numeric convert units 1022A-B, and replication with replication unit 1024 on the memory input. Write mask registers 1026 allow predicating resulting vector writes.

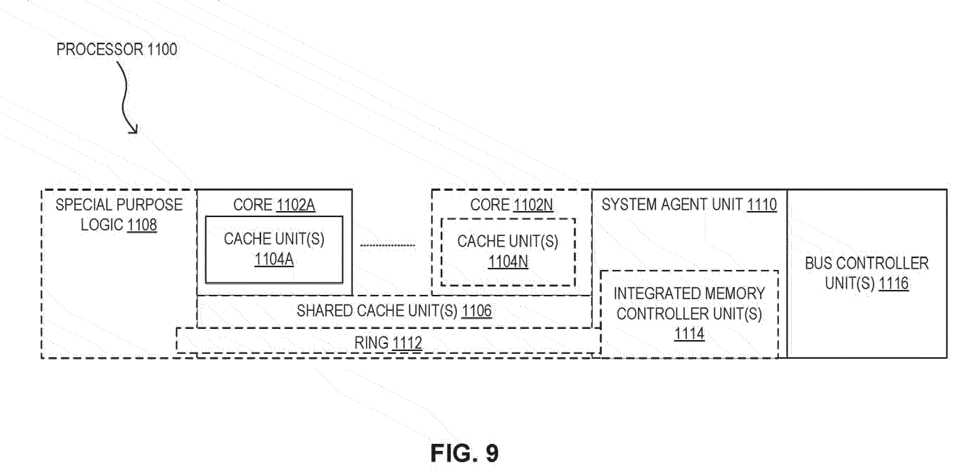

**Figure 9** is a block diagram of a processor 1100 that may have more than one core, may have an integrated memory controller, and may have integrated graphics according to embodiments of the invention. The solid lined boxes in Figure 9 illustrate a processor 1100 with a single core 1102A, a system agent 1110, a set of one or more bus controller units 1116, while the optional addition of the dashed lined boxes illustrates an alternative processor 1100 with multiple cores 1102A-N, a set of one or more integrated memory controller unit(s) in the system agent unit 1110, and special purpose logic 1108.

Thus, different implementations of the processor 1100 may include: 1) a CPU with the special purpose logic 1108 being integrated graphics and/or scientific (throughput) logic (which may include one or more cores), and the cores 1102A-N being one or more general purpose cores (e.g., general purpose in-order cores, general purpose out-of-order cores, a combination of the two); 2) a coprocessor with the cores 1102A-N being a large number of special purpose cores intended primarily for graphics and/or scientific (throughput); and 3) a coprocessor with the cores 1102A-N being a large number of general purpose in-order cores. Thus, the processor 1100 may be a general-purpose processor, coprocessor or special-purpose processor, such as, for example, a network or communication processor, compression engine, graphics processor, GPGPU, a high-throughput many integrated core (MIC) coprocessor (including 30 or more cores), embedded processor, or the like. The processor may be implemented on one or more chips. The processor 1100 may be a part of and/or may be implemented on one or more substrates using any of a number of process technologies, such as, for example, BiCMOS, CMOS, or NMOS.

The memory hierarchy includes one or more levels of cache units 1104A-N within the cores, a set or one or more shared cache units 1106, and external memory (not shown) coupled to the set of integrated memory controller units 1114. The set of shared cache units 1106 may include one or more mid-level caches, such as L2, level 3 (L3), level 4 (L4), or other levels of cache, a last level cache (LLC), and/or combinations thereof. While in one embodiment a ring based interconnect unit 1112 interconnects the special purpose logic 1108, the set of shared cache units 1106, and the system agent unit 1110/integrated memory controller unit(s) 1114, alternative embodiments may use any number of well-known techniques for interconnecting such units. In one embodiment, coherency is maintained between one or more cache units 1106 and cores 1102 A-N.

The system agent unit 1110 includes those components coordinating and operating cores 1102A-N. The system agent unit 1110 may include for example a power control unit (PCU) and a display unit. The PCU may be or include logic and components needed for regulating the power state of the cores 1102A-N and the integrated graphics logic 1108. The display unit is for driving one or more externally connected displays.

The cores 1102A-N may be homogenous or heterogeneous in terms of architecture instruction set; that is, two or more of the cores 1102A-N may be capable of execution the same instruction set, while others may be capable of executing only a subset of that instruction set or a different instruction set. Such cores 1102A-N may convert certain memory access instructions into subline memory access instructions as described herein.

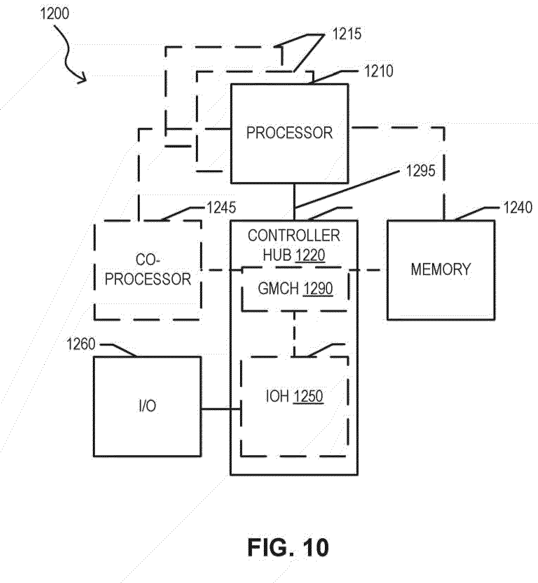

**Figures 10-13** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

**Figure 10** is a block diagram of a system 1200 according to embodiments of the invention. The system 1200 may include one or more processors 1210, 1215, which are coupled to a controller hub 1220. In one embodiment, the controller hub 1220 includes a graphics memory controller hub (GMCH) 1290 and an Input/Output Hub (IOH) 1250 (which may be on separate chips); the GMCH 1290 includes a memory controller to control operations within a coupled memory and a graphics controller to which are coupled memory 1240 and a coprocessor 1245; the IOH 1250 couples input/output (I/O) devices 1260 to the GMCH 1290. Alternatively, one or both of the memory and graphics controllers are integrated within the processor (as described herein), the memory 1240 and the coprocessor 1245 are coupled directly to the processor 1210, and the controller hub 1220 in a single chip with the IOH 1250.

The optional nature of additional processors 1215 is denoted in Figure 10 with broken lines. Each processor 1210, 1215 may include one or more of the processing cores described herein and may be some version of the processor 1100.

The memory 1240 may be, for example, dynamic random access memory (DRAM), phase change memory (PCM), or a combination of the two. For at least one embodiment, the controller hub 1220 communicates with the processor(s) 1210, 1215 via a multi-drop bus, such as a frontside bus (FSB), point-to-point interface such as QuickPath Interconnect (QPI), or similar connection 1295.

In one embodiment, the coprocessor 1245 is a special-purpose processor, such as, for example, a high-throughput MIC processor, a network or communication processor, compression engine, graphics processor, GPGPU, embedded processor, or the like. In one embodiment, controller hub 1220 may include an integrated graphics accelerator.

There can be a variety of differences between the physical resources 1210, 1215 in terms of a spectrum of metrics of merit including architectural, microarchitectural, thermal, power consumption characteristics, and the like.

In one embodiment, the processor 1210 executes instructions that control data processing operations of a general type. Embedded within the instructions may be coprocessor instructions. The processor 1210 recognizes these coprocessor instructions as being of a type that should be executed by the attached coprocessor 1245. Accordingly, the processor 1210 issues these coprocessor instructions (or control signals representing coprocessor instructions) on a coprocessor bus or other interconnect, to coprocessor 1245. Coprocessor(s) 1245 accept and execute the received coprocessor instructions.

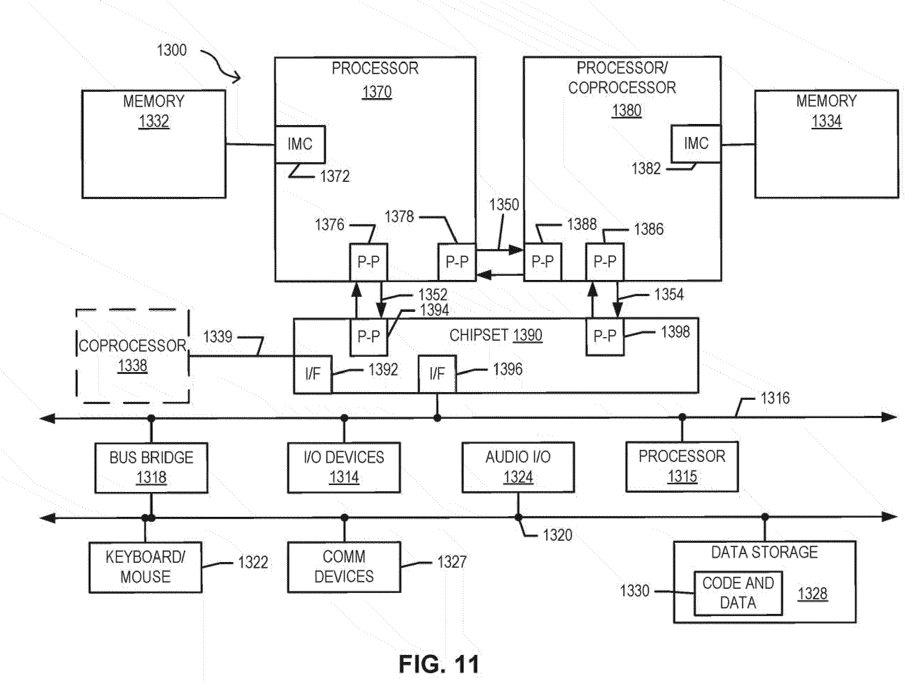

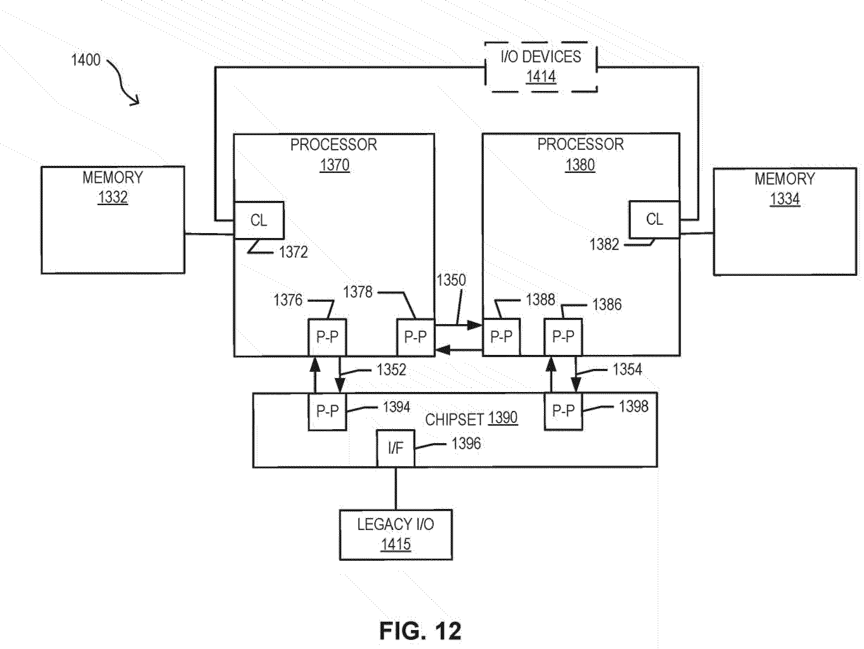

**Figures 11** **and** **12** are block diagrams of more specific exemplary systems 1300 and 1400 according to embodiments of the invention. As shown in Figure 11, multiprocessor system 1300 is a point-to-point interconnect system, and includes a first processor 1370 and a second processor 1380 coupled via a point-to-point interconnect 1350. Each of processors 1370 and 1380 may be some version of the processor 1100. In one embodiment of the invention, processors 1370 and 1380 are respectively processors 1210 and 1215, while coprocessor 1338 is coprocessor 1245. In another embodiment, processors 1370 and 1380 are respectively processor 1210 and coprocessor 1245.

Processors 1370 and 1380 are shown including integrated memory controller (IMC) units 1372 and 1382, respectively. Processor 1370 also includes as part of its bus controller units point-to-point (P-P) interfaces 1376 and 1378; similarly, second processor 1380 includes P-P interfaces 1386 and 1388. Processors 1370, 1380 may exchange information via a P-P interface 1350 using P-P interface circuits 1378, 1388. As shown in Figure 11, IMCs 1372 and 1382 couple the processors to respective memories, namely a memory 1332 and a memory 1334, which may be portions of main memory locally attached to the respective processors.

Processors 1370, 1380 may each exchange information with a chipset 1390 via individual P-P interfaces 1352, 1354 using point to point interface circuits 1376, 1394, 1386, 1398. Chipset 1390 may optionally exchange information with the coprocessor 1338 via a high-performance interface 1339. In one embodiment, the coprocessor 1338 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1390 may be coupled to a first bus 1316 via an interface 1396. In one embodiment, first bus 1316 may be a Peripheral Component Interconnect (PCI) bus, or a bus such as a PCI Express bus or another third generation I/O interconnect bus, although the scope of the present invention is not so limited.

As shown in Figure 11, various I/O devices 1314 may be coupled to first bus 1316, along with a bus bridge 1318 which couples first bus 1316 to a second bus 1320. In one embodiment, one or more additional processors 1315, such as coprocessors, high-throughput MIC processors, GPGPUs, accelerators (such as, e.g., graphics accelerators or digital signal processing (DSP) units), field programmable gate arrays, or any other processor, are coupled to first bus 1316. In one embodiment, second bus 1320 may be a low pin count (LPC) bus. Various devices may be coupled to a second bus 1320 including, for example, a keyboard and/or mouse 1322, communication devices 1327 and a storage unit 1328 such as a disk drive or other mass storage device which may include instructions/code and data 1330, in one embodiment. Further, an audio I/O 1324 may be coupled to the second bus 1320. Note that other architectures are possible. For example, instead of the point-to-point architecture of Figure 11, a system may implement a multi-drop bus or other such architecture.

**Figure 12** presents a block diagram of a second more specific exemplary system 1400 in accordance with an embodiment of the present invention. Like elements in Figures 11 and 12 bear like reference numerals, and certain aspects of Figure 11 have been omitted from Figure 12 in order to avoid obscuring other aspects of Figure 12.

Figure 12 illustrates that the processors 1370, 1380 may include integrated memory and I/O control logic ("CL") 1372 and 1382, respectively. Thus, the CL 1372, 1382 include integrated memory controller units and include I/O control logic. Figure 12 illustrates that not only are the memories 1332, 1334 coupled to the CL 1372, 1382, but also that I/O devices 1414 are also coupled to the control logic 1372, 1382. Legacy I/O devices 1415 are coupled to the chipset 1390.

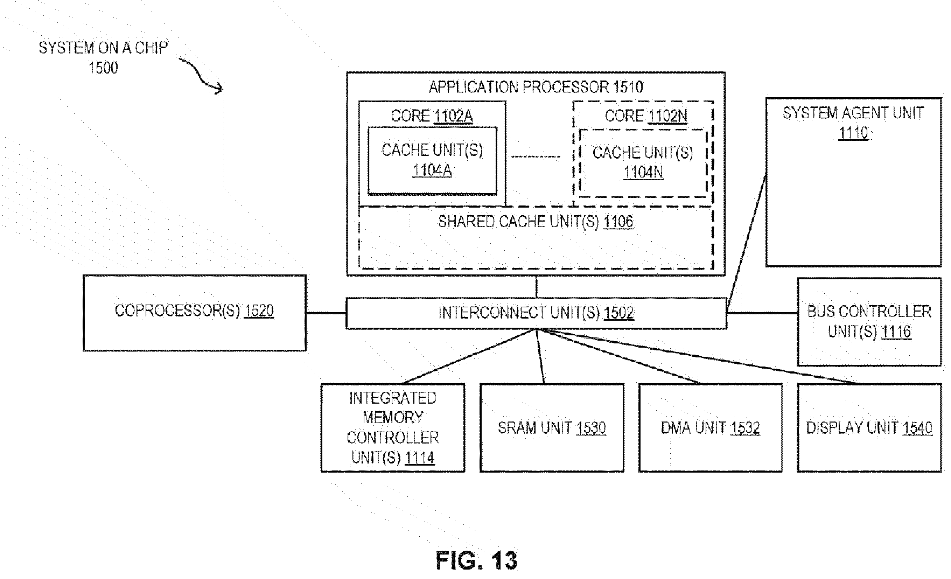

**Figure 13** is a block diagram of a system on a chip (SoC) 1500 according to embodiments of the invention. Dashed lined boxes are optional features on more advanced SoCs. In Figure 13, an interconnect unit(s) 1502 is coupled to: an application processor 1510 which includes a set of one or more cores 1102A-N (including constituent cache units 1104A-N) and shared cache unit(s) 1106; a system agent unit 1110; a bus controller unit(s) 1116; an integrated memory controller unit(s) 1114; a set or one or more coprocessors 1520 which may include integrated graphics logic, an image processor, an audio processor, and a video processor; an static random access memory (SRAM) unit 1530; a direct memory access (DMA) unit 1532; and a display unit 1540 for coupling to one or more external displays. In one embodiment, the coprocessor(s) 1520 include a special-purpose processor, such as, for example, a network or communication processor, compression engine, GPGPU, a high-throughput MIC processor, embedded processor, or the like.

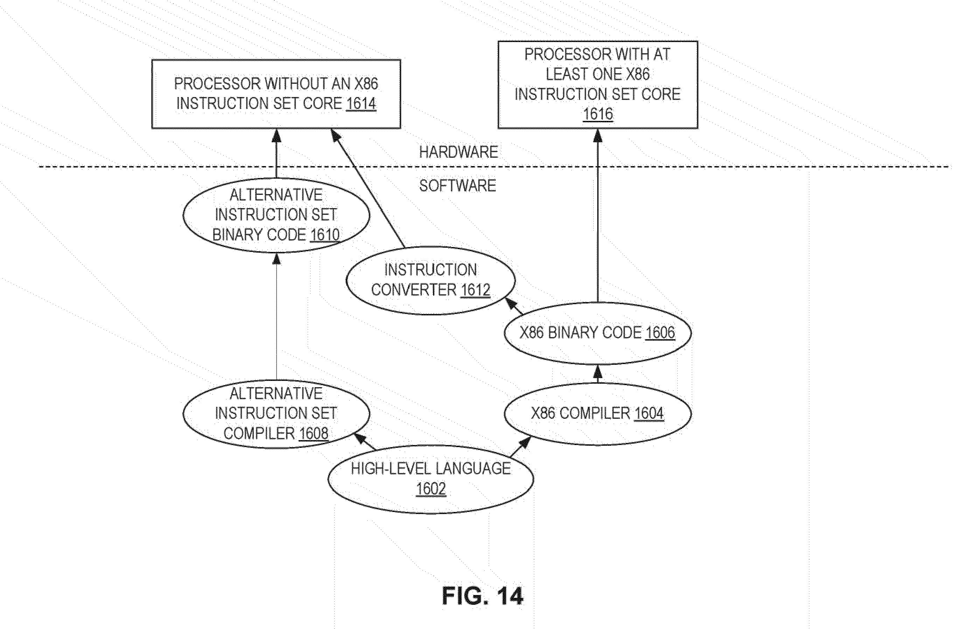

**Figure 14** is a block diagram depicting the use of a software instruction converter 1612 to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. Figure 14 shows a program in a high-level language 1602 may be compiled using an x86 compiler 1604 to generate x86 binary code 1606 that may be natively executed by a processor with at least one x86 instruction set core 1616. The processor with at least one x86 instruction set core 1616 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1604 represents a compiler that is operable to generate x86 binary code 1606 (e.g., object code) that can, with or without additional linkage processing, be executed on the processor with at least one x86 instruction set core 1616. Similarly, Figure 14 shows the program in the high-level language 1602 may be compiled using an alternative instruction set compiler 1608 to generate alternative instruction set binary code 1610 that may be natively executed by a processor without at least one x86 instruction set core 1614 (e.g., a processor with cores that execute the MIPS instruction set of MIPS Technologies of Sunnyvale, CA and/or that execute the ARM instruction set of ARM Holdings of Sunnyvale, CA). The instruction converter 1612 is used to convert the x86 binary code 1606 into code that may be natively executed by the processor without an x86 instruction set core 1614. This converted code is not likely to be the same as the alternative instruction set binary code 1610 because an instruction converter capable of this is difficult to make; however, the converted code will accomplish the general operation and be made up of instructions from the alternative instruction set. Thus, the instruction converter 1612 represents software, firmware, hardware, or a combination thereof that, through emulation, simulation or any other process, allows a processor or other electronic device that does not have an x86 instruction set processor or core to execute the x86 binary code 1606.

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

### Conclusion

In the present disclosure, expressions such as "an embodiment," "one embodiment," and "another embodiment" are meant to generally reference embodiment possibilities. Those expressions are not intended to limit the invention to particular embodiment configurations. As used herein, those expressions may reference the same embodiment or different embodiments, and those embodiments are combinable into other embodiments. In light of the principles and example embodiments described and illustrated herein, it will be recognized that the illustrated embodiments can be modified in arrangement and detail without departing from the principles described and/or illustrated herein.

Also, according to the present disclosure, a device may include instructions and other data which, when accessed by a processor, cause the device to perform particular operations. For purposes of this disclosure, instructions which cause a device to perform operations may be referred to in general as software. Software and the like may also be referred to as control logic. Software that is used during a boot process may be referred to as firmware. Software that is stored in nonvolatile memory may also be referred to as firmware. Software may be organized using any suitable structure or combination of structures. Accordingly, terms like program and module may be used in general to cover a broad range of software constructs, including without limitation application programs, subprograms, routines, functions, procedures, drivers, libraries, data structures, processes, microcode, and other types of software components. Also, it should be understood that a software module may include more than one component, and those components may cooperate to complete the operations of the module. Also, the operations which the software causes a device to perform may include creating an operating context, instantiating a particular data structure, etc. Embodiments may be implemented as software to execute on a programmable system comprising at least one processor, a storage system (e.g., volatile memory and/or one or more non-volatile storage elements), at least one input device, and at least one output device.

Any suitable operating environment and programming language (or combination of operating environments and programming languages) may be used to implement software components described herein. For example, program code may be implemented in a high-level procedural or object oriented programming language, or in assembly or machine language. The mechanisms described herein are not limited to any particular programming language. In any case, the language may be a compiled or interpreted language.

A medium which contains data and which allows another component to obtain that data may be referred to as a machine-accessible medium or a machine-readable medium. Accordingly, embodiments may include machine-readable media containing instructions for performing some or all of the operations described herein. Such media may be referred to in general as apparatus and in particular as program products. In one embodiment, software for multiple components is stored in one machine-readable medium. In other embodiments, two or more machine-readable media may be used to store the software for one or more components. For instance, instructions for one component may be stored in one medium, and instructions another component may be stored in another medium. Or a portion of the instructions for one component may be stored in one medium, and the rest of the instructions for that component (as well instructions for other components), may be stored in one or more other media. Similarly, software that is described above as residing on a particular device in one embodiment may, in other embodiments, reside on one or more other devices. For instance, in a distributed environment, some software may be stored locally, and some may be stored remotely. Similarly, operations that are described above as being performed on one particular device in one embodiment may, in other embodiments, be performed by one or more other devices.

Other embodiments may be implemented in data and may be stored on a non-transitory storage medium, which if used by at least one machine, causes the at least one machine to fabricate at least one integrated circuit to perform one or more operations according to the present disclosure. Still further embodiments may be implemented in a computer readable storage medium including information that, when manufactured into an SoC or other processor, is to configure the SoC or other processor to perform one or more operations according to the present disclosure. One or more aspects of at least one embodiment may be implemented by representative instructions, stored on a machine-readable medium, which represent various logic units within the processor, and which, when read by a machine, cause the machine to fabricate logic units to perform the techniques described herein. The instructions representing various logic units may be referred to as "IP cores," and they may be stored on a tangible, machine readable medium and supplied to various customers or manufacturing facilities to load into the fabrication machines that actually make the logic units or the processor. One or more aspects of at least one embodiment may include machine-readable media containing instructions or design data which defines structures, circuits, apparatuses, processors and/or system features described herein. For instance, design data may be formatted in a hardware description language (HDL).

The machine-readable media for some embodiments may include, without limitation, tangible non-transitory storage components such as magnetic disks, optical disks, magneto-optical disks, dynamic random access memory (RAM), static RAM, read-only memory (ROM), solid state drives (SSDs), phase change memory (PCM), etc., as well as processors, controllers, and other components that include data storage facilities. For purposes of this disclosure, the term "ROM" may be used in general to refer to nonvolatile memory devices such as erasable programmable ROM (EPROM), electrically erasable programmable ROM (EEPROM), flash ROM, flash memory, etc.

It should also be understood that the hardware and software components depicted herein represent functional elements that are reasonably self-contained so that each can be designed, constructed, or updated substantially independently of the others. In alternative embodiments, components may be implemented as hardware, software, or combinations of hardware and software for providing the functionality described and illustrated herein. In some embodiments, some or all of the control logic for implementing the described operations may be implemented in hardware logic (e.g., as microcode in an integrated circuit chip, as a programmable gate array (PGA), as an application-specific integrated circuit (ASIC), etc.). Also, terms such as "circuit" and "circuitry" may be used interchangeably herein. Those terms and terms like "logic" may be used to refer to analog circuitry, digital circuitry, hard-wired circuitry, programmable circuitry, processor circuitry, microcontroller circuitry, hardware logic circuitry, state machine circuitry, any other type of hardware component, or any suitable combination of hardware components.

Additionally, the present teachings may be used to advantage in many different kinds of data processing systems. Such data processing systems may include, without limitation, accelerators, systems on a chip (SOCs), wearable devices, handheld devices, smartphones, telephones, entertainment devices such as audio devices, video devices, audio/video devices (e.g., televisions and set-top boxes), vehicular processing systems, personal digital assistants (PDAs), tablet computers, laptop computers, portable computers, personal computers (PCs), workstations, servers, client-server systems, distributed computing systems, supercomputers, high-performance computing systems, computing clusters, mainframe computers, minicomputers, and other devices for processing or transmitting information. Accordingly, unless explicitly specified otherwise or required by the context, references to any particular type of data processing system (e.g., a PC) should be understood as encompassing other types of data processing systems, as well. A data processing system may also be referred to as an apparatus. The components of a data processing system may also be referred to as apparatus.

Also, unless expressly specified otherwise, components that are described as being coupled to each other, in communication with each other, responsive to each other, or the like need not be in continuous communication with each other and need not be directly coupled to each other. Likewise, when one component is described as receiving data from or sending data to another component, that data may be sent or received through one or more intermediate components, unless expressly specified otherwise. In addition, some components of the data processing system may be implemented as adapter cards with interfaces (e.g., a connector) for communicating with a bus. Alternatively, devices or components may be implemented as embedded controllers, using components such as programmable or non-programmable logic devices or arrays, ASICs, embedded computers, smart cards, and the like. For purposes of this disclosure, the term "bus" includes pathways that may be shared by more than two devices, as well as point-to-point pathways. Similarly, terms such as "line," "pin," etc. should be understood as referring to a wire, a set of wires, or any other suitable conductor or set of conductors. For instance, a bus may include one or more serial links, a serial link may include one or more lanes, a lane may be composed of one or more differential signaling pairs, and the changing characteristics of the electricity that those conductors are carrying may be referred to as signals on a line. Also, for purpose of this disclosure, the term "processor" denotes a hardware component that is capable of executing software. For instance, a processor may be implemented as a central processing unit (CPU), a processing core, or as any other suitable type of processing element. A CPU may include one or more processing cores, and a device may include one or more CPUs.

Also, although one or more example processes have been described with regard to particular operations performed in a particular sequence, numerous modifications could be applied to those processes to derive numerous alternative embodiments of the present invention. For example, alternative embodiments may include processes that use fewer than all of the disclosed operations, process that use additional operations, and processes in which the individual operations disclosed herein are combined, subdivided, rearranged, or otherwise altered.

Embodiments include the following examples:
Example A1 is an integrated circuit with technology for providing OOB processor telemetry. The integrated circuit comprises a processor comprising at least one core and a distributed core perimeter. The integrated circuit also comprises a telemetry push agent in the distributed core perimeter and an OOB telemetry manager in the core to operate out of band and to send telemetry data for the processor to the telemetry push agent. Also, the telemetry push agent comprises control logic to (a) receive the telemetry data from the OOB telemetry manager and (b) forward at least some of the telemetry data to in-band telemetry software.
Example A2 is an integrated circuit according to Example A1, wherein the telemetry push agent is configured to operate out of band.
Example A3 is an integrated circuit according to Example A1, further comprising telemetry counters in the core, and a DCRA in the processor. Also, the OOB telemetry manager is configured to collect telemetry data from the telemetry counters, write at least some of the collected telemetry data to the DCRA, and send at least some of the collected telemetry data from the DCRA to the telemetry push agent. Example A3 may also include the features of Example A2.
Example A4 is an integrated circuit according to Example A3, wherein the OOB telemetry manager comprises (a) a telemetry collector to operate out of band, to read raw telemetry data from the telemetry counters, and to generate collected telemetry data based on the raw telemetry data; and (b) a telemetry messenger to operate out of band, to generate a telemetry packet based on the collected telemetry data, and to send the telemetry packet to the telemetry push agent.
Example A5 is an integrated circuit according to Example A3, wherein the DCRA comprises an array of registers that reside in the core. Example A5 may also include the features of Example A4.
Example A6 is an integrated circuit according to Example A5, wherein the OOB telemetry manager is configured to (a) generate multiple telemetry entries, based on the collected telemetry data; and (b) write each telemetry entry to a different register in the DCRA.
Example A7 is an integrated circuit according to Example A1, wherein the core further comprises telemetry counters; and the OOB telemetry manager comprises (a) a telemetry collector to operate out of band, to read raw telemetry data from the telemetry counters, and to generate collected telemetry data based on the raw telemetry data; and (b) a telemetry messenger to operate out of band, to generate a telemetry packet based on the collected telemetry data, and to send the telemetry packet to the telemetry push agent. Example A7 may also include the features of any one or more of Examples A2-A6.
Example A8 is an integrated circuit according to Example A7, further comprising a telemetry configuration register in the processor. Also, the telemetry collector is configured to determine what kinds of telemetry data to collect, based at least in part telemetry configuration data from the telemetry configuration register.
Example A9 is an integrated circuit according to Example A1, wherein (a) the core comprises a first core; (b) the OOB telemetry manager comprises a first OOB telemetry manager to send telemetry data for the first core to the telemetry push agent; and (c) the integrated circuit further comprises a second core with a second OOB telemetry manager to operate out of band and to send telemetry data for the second core to the telemetry push agent. Example A9 may also include the features of any one or more of Examples A2-A8.
Example B1 is a data processing system with technology for providing OOB processor telemetry. The data processing system comprises (a) a processor comprising at least one core and a distributed core perimeter, (b) RAM responsive to the processor, (c) a telemetry push agent in the distributed core perimeter, and (d) an OOB telemetry manager in the core to operate out of band and to send telemetry data for the processor to the telemetry push agent. Also, the telemetry push agent comprises control logic to (a) receive the telemetry data from the OOB telemetry manager and (b) forward at least some of the telemetry data to in-band telemetry software.
Example B2 is a data processing system according to Example B1, further comprising NVS responsive to the processor. Also, the NVS comprises the in-band telemetry software.
Example B3 is a data processing system according to Example B1, wherein the telemetry push agent is configured to operate out of band. Example B3 may also include the features of Example B2.
Example B4 is a data processing system according to Example B1, further comprising telemetry counters in the core, and a DCRA in the processor. Also, the OOB telemetry manager is configured to collect telemetry data from the telemetry counters, write at least some of the collected telemetry data to the DCRA, and send at least some of the collected telemetry data from the DCRA to the telemetry push agent. Example B4 may also include the features of any one or more of Examples B2-B3.
Example B5 is a data processing system according to Example B4, wherein the OOB telemetry manager comprises (a) a telemetry collector to operate out of band, to read raw telemetry data from the telemetry counters, and to generate collected telemetry data based on the raw telemetry data; and (b) a telemetry messenger to operate out of band, to generate a telemetry packet based on the collected telemetry data, and to send the telemetry packet to the telemetry push agent.
Example B6 is a data processing system according to Example B4, wherein the DCRA comprises an array of registers that reside in the core. Example B6 may also include the features of Example B5.
Example B7 is a data processing system according to Example B6, wherein the OOB telemetry manager is configured to (a) generate multiple telemetry entries, based on the collected telemetry data; and (b) write each telemetry entry to a different register in the DCRA.
Example B8 is a data processing system according to Example B1, wherein the core further comprises telemetry counters; and the OOB telemetry manager comprises (a) a telemetry collector to operate out of band, to read raw telemetry data from the telemetry counters, and to generate collected telemetry data based on the raw telemetry data; and (b) a telemetry messenger to operate out of band, to generate a telemetry packet based on the collected telemetry data, and to send the telemetry packet to the telemetry push agent. Example B8 may also include the features of any one or more of Examples B2-B7.
Example B9 is a data processing system according to Example B8, further comprising a telemetry configuration register in the processor. Also, the telemetry collector is configured to determine what kinds of telemetry data to collect, based at least in part telemetry configuration data from the telemetry configuration register.
Example C1 is a method for providing OOB processor telemetry. The method comprises (a) at an OOB telemetry manager in a core of a processor, collecting telemetry data for the processor; (b) sending the telemetry data from the OOB telemetry manager to a telemetry push agent in a distributed core perimeter of the processor; and (c) forwarding at least some of the telemetry data from the telemetry push agent to in-band telemetry software executing on the processor. Also, the OOB telemetry manager operates out of band.
Example C2 is a method according to Example C1, wherein the telemetry push agent operates out of band.
Example C3 is a method according to Example C1, wherein the operation of collecting telemetry data for the processor comprises reading telemetry data from telemetry counters in the core, and writing at least some of the collected telemetry data to a DCRA in the processor. Example C3 may also include the features of Example C2.
Example C4 is a method according to Example C3, wherein the operations of reading telemetry data from telemetry counters and writing at least some of the collected telemetry data to the DCRA are performed by a telemetry collector in the OOB telemetry manager. Also, the operation of forwarding at least some of the telemetry data from the telemetry push agent to in-band telemetry software is performed by a telemetry messenger in the OOB telemetry manager.

In view of the wide variety of useful permutations that may be readily derived from the example embodiments described herein, this detailed description is intended to be illustrative only, and should not be construed as limiting the scope of coverage.

## Claims

1. An integrated circuit with technology for providing out-of-band (OOB) processor telemetry, the integrated circuit comprising:
a processor comprising at least one core and a distributed core perimeter;
a telemetry push agent in the distributed core perimeter; and
an OOB telemetry manager in the core to operate out of band and to send telemetry data for the processor to the telemetry push agent; and
wherein the telemetry push agent comprises control logic to (a) receive the telemetry data from the OOB telemetry manager and (b) forward at least some of the telemetry data to in-band telemetry software.

2. An integrated circuit according to claim 1, wherein the telemetry push agent is configured to operate out of band.

3. An integrated circuit according to claim 1, further comprising:
telemetry counters in the core; and
a distributed core register array (DCRA) in the processor; and
wherein the OOB telemetry manager is configured to collect telemetry data from the telemetry counters, write at least some of the collected telemetry data to the DCRA, and send at least some of the collected telemetry data from the DCRA to the telemetry push agent.

4. An integrated circuit according to claim 3, wherein the OOB telemetry manager comprises:
a telemetry collector to operate out of band, to read raw telemetry data from the telemetry counters, and to generate collected telemetry data based on the raw telemetry data; and
a telemetry messenger to operate out of band, to generate a telemetry packet based on the collected telemetry data, and to send the telemetry packet to the telemetry push agent.

5. An integrated circuit according to claim 3, wherein the DCRA comprises an array of registers that reside in the core.

6. An integrated circuit according to claim 5, wherein the OOB telemetry manager is configured to:
generate multiple telemetry entries, based on the collected telemetry data; and
write each telemetry entry to a different register in the DCRA.

7. An integrated circuit according to claim 1, wherein:
the core further comprises telemetry counters; and
the OOB telemetry manager comprises:
a telemetry collector to operate out of band, to read raw telemetry data from the telemetry counters, and to generate collected telemetry data based on the raw telemetry data; and
a telemetry messenger to operate out of band, to generate a telemetry packet based on the collected telemetry data, and to send the telemetry packet to the telemetry push agent.

8. An integrated circuit according to claim 7, further comprising:
a telemetry configuration register in the processor; and
wherein the telemetry collector is configured to determine what kinds of telemetry data to collect, based at least in part telemetry configuration data from the telemetry configuration register.

9. An integrated circuit according to claim 1, wherein:
the core comprises a first core;
the OOB telemetry manager comprises a first OOB telemetry manager to send telemetry data for the first core to the telemetry push agent; and
the integrated circuit further comprises a second core with a second OOB telemetry manager to operate out of band and to send telemetry data for the second core to the telemetry push agent.

10. A data processing system with technology for providing out-of-band (OOB) processor telemetry, the data processing system comprising:
a processor comprising at least one core and a distributed core perimeter;
random access memory (RAM) responsive to the processor;
a telemetry push agent in the distributed core perimeter; and
an OOB telemetry manager in the core to operate out of band and to send telemetry data for the processor to the telemetry push agent; and
wherein the telemetry push agent comprises control logic to (a) receive the telemetry data from the OOB telemetry manager and (b) forward at least some of the telemetry data to in-band telemetry software.

11. A data processing system according to claim 10, wherein the telemetry push agent is configured to operate out of band.

12. A data processing system according to claim 10, further comprising:
telemetry counters in the core; and
a distributed core register array (DCRA) in the processor; and
wherein the OOB telemetry manager is configured to collect telemetry data from the telemetry counters, write at least some of the collected telemetry data to the DCRA, and send at least some of the collected telemetry data from the DCRA to the telemetry push agent.

13. A data processing system according to claim 10, wherein:
the core further comprises telemetry counters; and
the OOB telemetry manager comprises:
a telemetry collector to operate out of band, to read raw telemetry data from the telemetry counters, and to generate collected telemetry data based on the raw telemetry data; and
a telemetry messenger to operate out of band, to generate a telemetry packet based on the collected telemetry data, and to send the telemetry packet to the telemetry push agent.

14. A method for providing out-of-band (OOB) processor telemetry, the method comprising:
at an OOB telemetry manager in a core of a processor, collecting telemetry data for the processor;
sending the telemetry data from the OOB telemetry manager to a telemetry push agent in a distributed core perimeter of the processor; and
forwarding at least some of the telemetry data from the telemetry push agent to in-band telemetry software executing on the processor; and
wherein the OOB telemetry manager operates out of band.

15. A method according to claim 14, wherein the operation of collecting telemetry data for the processor comprises:
reading telemetry data from telemetry counters in the core; and
writing at least some of the collected telemetry data to a distributed core register array (DCRA) in the processor.
